# EUROPÄISCHE PATENTSCHRIFT

(11) **EP 3 767 289 B1**
(45) Veröffentlichungstag und Bekanntmachung des Hinweises auf die Patenterteilung: **31.08.2022**
(21) Anmeldenummer: 20180875.5
(22) Anmeldetag: 18.06.2020
(51) Int. Cl.: G01N 31/22

(54) **TESTVORRICHTUNG UND VERFAHREN ZUR SEMI-QUANTITATIVEN BESTIMMUNG VON CHLORDIOXID IN EINER FLÜSSIGEN PROBE ENTHALTEND FREIES CHLOR**
TEST DEVICE AND METHOD FOR SEMI-QUANTITATIVE DETERMINATION OF CHLORINE DIOXIDE IN A LIQUID SAMPLE CONTAINING FREE CHLORINE
DISPOSITIF D'ESSAI ET PROCÉDÉ DE DÉTERMINATION SEMI-QUANTITATIVE DE CHLORDIOXYDE DANS UN ÉCHANTILLON LIQUIDE CONTENANT DU CHLORE LIBRE

(30) Priorität: 18.07.2019 DE 102019119480
(43) Veröffentlichungstag der Anmeldung: 20.01.2021
(73) Patentinhaber: AXAGARIUS GmbH & Co. KG, 52355 Düren (DE)
(72) Erfinder: Hoffmann, Dr. Jürgen, 52355 Düren (DE); Husmann, Dr. Ralph, 52355 Düren (DE); Lange, Dr. Dominik, 50858 Köln (DE); Schillberg, Tobias, 52372 Kreuzau (DE)
(74) Vertreter: Paul & Albrecht Patentanwälte PartG mbB

(56) Entgegenhaltungen:
- CN-A- 108 152 288
- CN-A- 109 406 425
- US-A1- 2003 092 189
- US-A1- 2008 009 641
- US-A1- 2008 206 879
- LaMotte: "Test Kits & Test Strips", , Dezember 2014 (2014-12), XP055759364, Gefunden im Internet: URL:https://lamotte.com/media/wysiwyg/pdf/ saleslit/LaMottePeraceticAcidChlorineDioxi deFlyer.pdf

## Beschreibung

Die vorliegende Erfindung betrifft eine Testvorrichtung zur semi-quantitativen Bestimmung von Chlordioxid in einer flüssigen Probe. Ferner betrifft die vorliegende Erfindung ein Verfahren zur semi-quantitativen Bestimmung von Chlordioxid in einer flüssigen Probe enthaltend freies Chlor.

Chlordioxid ist eine Verbindung aus Chlor und Sauerstoff. Es wird hauptsächlich zum Bleichen in der Textil-, Cellulose- und Papierindustrie und zum Desinfizieren eingesetzt, beispielsweise als Wasserentkeimungsmittel, als Desinfektionsmittel in der Lebensmittelindustrie oder zur Desinfektion und Desodorierung von Abfällen, Abwässern oder dergleichen.

Beim Einsatz von Chlordioxid ist häufig sicherzustellen, dass sich die Konzentration innerhalb vorgegebener Grenzen bewegt. Zur semi-quantitativen Bestimmung von Chlordioxid in einer flüssigen Probe stehen beispielsweise Testvorrichtungen zur Verfügung, die auf Redoxindikatoren und deren Farbreaktion basieren. So werden beispielsweise von den Unternehmen LaMotte, Indigo Instruments und ITS Testvorrichtungen in Form von Teststreifen angeboten, auf denen eine Trägermatrix angeordnet ist, die mit einem Indikatorreagens versehen ist. LaMotte bietet zwei Produkte an, mit denen Chlordioxid einerseits im Messbereich 0-10 mg/L und andererseits im Messbereich 0-500 mg/L semi-quantitativ erfasst werden kann. Der Messbereich von 0-500 mg/L Chlordioxid wird auch von Teststreifen von Indigo Instruments abgedeckt. ITS bietet Teststreifen für die Messbereiche 0,1-1,6 mg/L und 0,5-100 mg/L Chlordioxid an.

Ein weiterer Teststreifen ist in der Druckschrift US 2003/0092189 A1 offenbart.

Chlordioxid und freies Chlor können in wässriger Lösung nebeneinander vorliegen. Als Oxidationsmittel nehmen sowohl Chlordioxid als auch freies Chlor auf den Farbumschlag eines Redoxindikators Einfluss, was jedoch nicht wünschenswert ist, wenn allein die Konzentration von Chlordioxid bestimmt werden soll. Vor diesem Hintergrund ist es wünschenswert, den Farbumschlag des Redoxindikators gegenüber anderen in der zu prüfenden flüssigen Probe enthaltenen Oxidationsmitteln zu entstören, insbesondere gegenüber freies Chlor.

Ausgehend von diesem Stand der Technik ist es eine Aufgabe der vorliegenden Erfindung, eine alternative Testvorrichtung zur semi-quantitativen Bestimmung von Chlordioxid in einer flüssigen Probe und ein alternatives Verfahren zur semi-quantitativen Bestimmung von Chlordioxid in einer flüssigen Probe enthaltend freies Chlor bereitzustellen.

Zur Lösung dieser Aufgabe schafft die vorliegende Erfindung eine Testvorrichtung der eingangs genannten Art, die mindestens zwei Trägermatrizes aufweist, wobei die erste Trägermatrix mindestens eine Aminosäure, Natriumthiosulfat, mindestens einen Redoxindikator, Puffersubstanzen und mindestens ein Tensid enthält, und wobei die zweite Trägermatrix mindestens ein anorganisches lodidsalz, Stärke und/oder mindestens ein Stärke-Derivat, Natriumthiosulfat, Puffersubstanzen und mindestens ein Tensid enthält, und wobei die Zusammensetzungen der Trägermatrizes derart gewählt sind, dass der Messbereich 10-2000 mg/L Chlordioxid von der ersten Trägermatrix und der Messbereich 2000-3500 mg/L Chlordioxid von der zweiten Trägermatrix abgedeckt wird. Ein wesentlicher Vorteil, der mit der erfindungsgemäßen Testvorrichtung einhergeht, besteht darin, dass Dank der beiden unterschiedlichen Trägermatrizes ein wesentlich größerer Messbereich Chlordioxid erfasst werden kann als bei den eingangs genannten, im Handel erhältlichen Teststreifen. Eine Kombination aus Aminosäure, Redoxindikator und Natriumthiosulfat zeigt eine sehr gut zu differenzierende Farbreihe. Gleichzeitig ist durch die Kombination von Aminosäure und Natriumthiosulfat eine Entstörung gegenüber 1000 mg/L freiem Chlor möglich.

Gemäß einer Ausgestaltung der vorliegenden Erfindung ist die Aminosäure ausgewählt aus der Gruppe bestehend aus Alanin, Glycin, Histidin, Leucin, Isoleucin, Lysin, Valin und Prolin, wobei Glycin bevorzugt ist.

Vorteilhaft ist der Redoxindikator ausgewählt aus der Gruppe bestehend aus Benzidin, o-Tolidin, o-Dianisidin, 3,3'-5,5'-Tetramethylbenzidin und Syringa-Idazin, wobei 3,3'-5,5'-Tetramethylbenzidin bevorzugt ist. Insbesondere eine Kombination von Glycin als Aminosäure und 3,3'-5,5'-Tetramethylbenzidin als Redoxindikator, zeigt zusammen mit Natriumthiosulfat eine sehr gut zu differenzierende Farbreihe von gelb bis braun-grün. In einer Ausführungsform liegt das molare Verhältnis zwischen Glycin, Natriumthiosulfat und 3,3'-5,5'-Tetramethylbenzidin zwischen 36:11:1 und 1:1:1 und bevorzugt zwischen 18:5,5:1 und 1:1:1 und besonders bevorzugt zwischen 15:4,5:1 und 1:1:1. In spezieller Weise liegt das molare Verhältnis hierbei zwischen 13,2:4:1 und 10,9:3,3:1 und ganz speziell bei 12:3,6:1.

Bevorzugt sind die Puffersubstanzen ausgewählt sind aus der Gruppe bestehend aus Phosphate, Acetate, Citrate, Tartrate und Borate, wobei Citrat bevorzugt ist.

Das Tensid ist vorteilhaft ausgewählt aus der Gruppe bestehend aus Fettalkoholethoxylate, Fettalkoholpropoxylate, Alkylglucoside, Alkylpolyglucoside, Oktylphenolethoxylate, Natriumlaurylsulfat, Ammoniumlaurylsulfat, Natriumlaurylethersulfat, Natriummyristylethersulfat, Natriumdioctylsulfosuccinat, Dodecylpyridiniumchlorid und Cocamidopropyl-Betain, wobei Natriumlaurylsulfat bevorzugt ist. Für die erste Trägermatrix liegt die Konzentration in einer Ausführungsform in der Imprägnierlösung zwischen 10 und 1 mmol/L bevorzugt zwischen 8 und 2 mmol/L und besonders bevorzugt zwischen 7 und 2,5 mmol/L und ganz speziell bei 3,1 mmol/L. Für die zweite Trägermatrix liegt die Konzentration in einer Ausführungsform in der Imprägnierlösung zwischen 10 und 0,2 mmol/L bevorzugt zwischen 5 und 0,5 mmol/L und besonders bevorzugt zwischen 3 und 1 mmol/L und ganz speziell bei 1,7 mmol/L.

Gemäß einer Ausgestaltung der vorliegenden Erfindung weist die erste Trägermatrix einen Inertfarbstoff auf, insbesondere Tartrazin, Neozapongelb oder Gelborange, wobei Tartrazin bevorzugt wird.

Die Konzentration des Inertfarbstoffes liegt bevorzugt im Bereich von 0,5-2,5 mmol/L, besonders bevorzugt im Bereich von 1,0-2,0 mmol/L, besser noch im Bereich von 1,0-1,5 mmol/L und beträgt insbesondere 1,24 mmol/L.

Eine solche Kombinationen von Natriumthiosulfat und einem Inertfarbstoff ermöglicht die Abdeckung des gewünschten Messbereichs und eine klare Farbdifferenzierung.

Gemäß einer Ausgestaltung der vorliegenden Erfindung ist das anorganische lodidsalz ausgewählt aus der Gruppe bestehend aus Lithiumiodid, Natriumiodid, Kaliumiodid, Rubidiumiodid, Cäsiumiodid, Magnesiumiodid, Calciumiodid, Strontiumiodid und Bariumiodid, wobei Kaliumiodid bevorzugt ist. In einer Ausführungsform liegt die Konzentration in der Imprägnierlösung zwischen 70 und 10 mmol/L bevorzugt zwischen 60 und 20 mmol/L und besonders bevorzugt zwischen 45 und 30 mmol/L und ganz speziell bei 38 mmol/L.

Die Stärke ist vorteilhaft ausgewählt aus der Gruppe bestehend aus Kartoffelstärke, Maisstärke, Reisstärke und Weizenstärke, wobei Kartoffelstärke bevorzugt ist.

Bevorzugt weist die Stärke/lodid-Mischung der zweiten Trägermatrix ein Gewichtsverhältnis von 1:1 bis 10:1 auf, besser noch von 2:1 bis 5:1, insbesondere von 2,8:1, und die Konzentration von Natriumthiosulfat liegt bevorzugt im Bereich von 0,3-0,46 mol/L, besser noch im Bereich von 0,34-0,44 mol/L, insbesondere im Bereich von 0,36-0,40 mol/L. Durch ein Puffersystem und eine solche Stärke/lodid-Mischung in Kombination mit Natriumthiosulfat als Reaktionsmittel wird die Reaktionsgeschwindigkeit der zweiten Trägermatrix an die Reaktionsgeschwindigkeit der ersten Trägermatrix angepasst, was eine zeitgleiche Ablesung beider Testfelder ermöglicht, wodurch die Handhabbarkeit der Testvorrichtung für den Endnutzer vereinfacht und verbessert wird.

In einer Ausführungsform liegt das Gewichtsverhältnis zwischen Natriumthiosulfat, Stärke und Kaliumiodid zwischen 30:10:1 und 1:1:1 und bevorzugt zwischen 25:6:1 und 1:1:1 und besonders bevorzugt zwischen 20:5:1 und 1:1:1. In spezieller Weise liegt das molare Verhältnis hierbei zwischen 18:4:1 und 10:2:1 und ganz speziell bei 15,1:3,1:1.

Gemäß einer Ausgestaltung der vorliegenden Erfindung ist die Testvorrichtung als Teststreifen ausgebildet, wobei die Trägermatrizes flüssigkeitsabsorbierend sind.

Die Trägermatrizes sind bevorzugt am Ende des Teststreifens räumlich voneinander getrennt, aber in räumlicher Nähe, angebracht, wodurch eine einfache Handhabung des Teststreifens erzielt wird.

Ferner schafft die vorliegende Erfindung zur Lösung der eingangs genannten Aufgabe ein Verfahren zur semi-quantitativen Bestimmung von Chlordioxid in einer flüssigen Probe enthaltend freies Chlor, umfassend:
a) In Kontakt bringen der flüssigen Probe mit beiden Trägermatrizes einer Testvorrichtung nach einem der vorhergehenden Ansprüche;
b) Vergleich der Farbe beider Trägermatrizes mit einer Farbskala zum Ablesen der Chlordioxid-Konzentration.

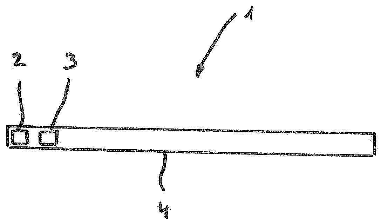

Weitere Merkmale und Vorteile der vorliegenden Erfindung werden anhand der nachfolgenden Beschreibung unter Bezugnahme auf die beiliegende Zeichnung deutlich, die schematisch eine Testvorrichtung gemäß einer Ausführungsform der vorliegenden Erfindung zeigt.

Die dargestellte Testvorrichtung 1 zur semi-quantitativen Bestimmung von Chlordioxid in einer flüssigen Probe ist als Teststreifen ausgeführt und umfasst zwei flüssigkeitsabsorbierende Trägermatrizes 2 und 3, die an einem Ende eines streifenförmigen Trägers 4, der vorliegend aus Kunststoff hergestellt ist, räumlich voneinander getrennt, aber in räumlicher Nähe, angebracht sind. Am anderen Ende kann ein Benutzer den Träger 4 mit den Fingern greifen, um die beiden Trägermatrizes 2 und 3 in eine flüssige Probe einzutauchen.

Die erste Trägermatrix 2 deckt den Messbereich 10-2000 mg/L Chlordioxid ab. Zur Herstellung dieser Trägermatrix wurden zwei Imprägnierlösungen angesetzt. Dabei wurde für einen halben Liter der ersten Imprägnierlösung folgende Rezeptur verwendet:

| | |
|---|---|
| Ethanol | 250 mL |
| VE-Wasser | 250 mL |
| Glycin | 10 g |
| Natriumthiosulfat-Pentahydrat | 10 g |
| Natriumhydroxid | 8,1 g |
| Citronensäure-Monohydrat | 15,9 g |
| Natriumlaurylsulfat | 0,45 g |
| Tartrazin | 0,33 g |

Zur Imprägnierung wurde Filterpapier in die erste Imprägnierlösung eingetaucht und im Anschluss getrocknet.

Für einen halben Liter der zweiten Imprägnierlösung wurde folgende Rezeptur verwendet:

| | |
|---|---|
| Ethanol | 500 mL |
| 3,3'-5,5'-Tetramethylbenzidin | 2,68 g |

Zur Imprägnierung wurde das mit der ersten Imprägnierlösung imprägnierte Filterpapier in die zweite Imprägnierlösung eingetaucht, woraufhin das Filterpapier anschließend getrocknet wird.

Die nachfolgende Tabelle 1 zeigt die Reaktionsfarben der ersten Trägermatrix 2:

**Tabelle 1**

| Konzentration Chlordioxid (ClO₂, mg/L) | | | | | | | | |
|---|---|---|---|---|---|---|---|---|
| 0 | 10 | 25 | 50 | 100 | 250 | 500 | 1000 | 2000 |
| Gelb | Hell Gelb-Grün | HellGrün | Grün | Hell Grün-Blau | Blau-Grün | Dunkel Blau-Grün | DunkelGrün | Braun-Grün |

Tabelle 2 zeigt die Reaktionsfarben der ersten Trägermatrix 2 (siehe Eintrag 3) gegenüber Reaktionsfarben anderer Vergleichsträgermatrizes (siehe Einträge 1 und 2 sowie 4 bis 8), die jeweils 3,3'-5,5'-Tetramethylbenzidin (TMB) als Redoxindikator in Kombination mit verschiedenen stickstoffhaltigen Verbindungen aufweisen.

**Tabelle 2**

| Eintrag | Reaktive Substanzen | Konzentration Chlordioxid (ClO₂, mg/L) | | | | | | | | | Chlor (Cl₂) |
|---|---|---|---|---|---|---|---|---|---|---|---|
| | | 0 | 10 | 25 | 50 | 100 | 250 | 500 | 1000 | 2000 | |
| 1 | TMB, Glycin | Gelb | Hell-Gelb-Grün | HellGrün | Grün | HellGrün-Blau | Blaugrün | DunkelBlau-Grün | DunkelGrün | Braun | Hellgrün (200 mg/L) |
| 2 | TMB, Glycin, Phenylsemicarbazid (PSC) | Gelb | Hell-Gelb-Grün | HellGrün | Grün | HellGrün-Blau | Blaugrün | DunkelBlau-Grün | DunkelGrün | Braun | Hellgrün (200 mg/L) |
| 3 | TMB, Glycin, Natriumthiosulfat | Gelb | Hell-Gelb-Grün | HellGrün | Grün | HellGrün-Blau | Blaugrün | DunkelBlau-Grün | DunkelGrün | Braun-grün | Gelb (1000 mg/L) |
| 4 | TMB, Na-Cyclamat | Gelb | Hell-Gelb-Grün | HellGrün | Grün | HellGrün-Blau | Blaugrün | DunkelBlau-Grün | DunkelGrün | Braun | Dunkelgrün (200 mg/L) |
| 5 | TMB, Ammoniumchlorid | Gelb | Hell-Gelb-Grün | HellGrün | Grün | HellGrün-Blau | Blaugrün | DunkelBlau-Grün | DunkelGrün | Braun | Dunkelgrün (200 mq/L) |
| 6 | TMB, Harnstoff | Gelb | Hell-Gelb-Grün | HellGrün | Grün | HellGrün-Blau | Blau-Grün | DunkelBlau-Grün | DunkelGrün | Braun | Dunkelgrün (200 mg/L) |
| 7 | TMB, Kreatinin | Gelb | Hell-Gelb-Grün | HellGrün | Grün | HellGrün-Blau | Blau-Grün | DunkelBlau-Grün | DunkelGrün | Braun | Dunkelgrün (200 mq/L) |
| 8 | TMB, PSC | Gelb | Hell-Gelb-Grün | HellGrün | Grün | HellGrün-Blau | Blau-Grün | DunkelBlau-Grün | DunkelGrün | Braun | Dunkelgrün (200 mq/L) |

Es ist zu erkennen, dass die Vergleichsmatrizes eine Farbreaktion von 10-1000 mg/L Chlordioxid erzeugen. Bei höheren Konzentrationen wird das Chromogen zerstört und färbt die Vergleichsträgermatrizes braun. Eine Entstörung gegenüber freiem Chlor liegt bis zu einer Konzentration von <200 mg/L vor. Die Trägermatrix 2 mit 3,3'-5,5'-Tetramethylbenzidin, Glycin und Natriumthiosulfat zeigt hingegen eine sehr gut zu differenzierende Farbreihe von 10-2000 mg/L Chlordioxid. Gleichzeitig ist durch die Kombination von Glycin und Natriumthiosulfat eine Entstörung gegenüber 1000 mg/L freiem Chlor möglich. Die Trägermatrix 2 bleibt bis zu dieser Konzentration gelb.

Die zweite Trägermatrix 3 deckt den Messbereich 2000-3500 mg/L Chlordioxid ab. Zur Herstellung dieser zweiten Trägermatrix 3 wurde eine Imprägnierlösung angesetzt. Dabei wurde für einen halben Liter dieser Imprägnierlösung folgende Rezeptur verwendet:

| | |
|---|---|
| VE-Wasser | 500 mL |
| Dinatriumhydrogenphosphat-Dihydrat | 40 g |
| Kaliumdihydrogenphosphat | 10 g |
| Stärke | 9,75 g |
| Kaliumiodid | 3,15 g |
| Natriumthiosulfat-Pentahydrat | 47,5 g |
| Natriumlaurylsulfat | 0,25 g |

Zur Imprägnierung wurde Filterpapier in die Imprägnierlösung eingetaucht, woraufhin das Filterpapier anschließend getrocknet wurde.

Tabelle 3 zeigt die Reaktionsfarben der zweiten Trägermatrix 3 (siehe Eintrag 6) gegenüber Reaktionsfarben anderer Vergleichsträgermatrizes, bei denen lediglich die Natriumthiosulfat-Konzentration variiert wurde (siehe Einträge 1 bis 5 und 7).

**Tabelle 3**

| Eintrag | Natriumthiosulfat-Konzentration (pro 20 mL Imprägnierlösung) | Konzentration Chlordioxid (ClO₂, mg/L) | | | |
|---|---|---|---|---|---|
| | | 2000 | 2500 | 3000 | 3500 |
| 1 | 0,9 g | Schwarz | Schwarz | Schwarz | Schwarz |
| 2 | 1,1 g | Schwarz | Schwarz | Schwarz | Schwarz |
| 3 | 1,3 g | Hellbraun | Schwarz | Schwarz | Schwarz |
| 4 | 1,5 g | Hellbraun | Schwarz | Schwarz | Schwarz |
| 5 | 1,7 g | Hellbraun | Schwarz | Schwarz | Schwarz |
| 6 | 1,9 g | Hellbraun | Dunkelbraun | Braun-Schwarz | Schwarz |
| 7 | 2,1 g | Weiß | Weiß | HellBraun | Braun |

Die zweite Trägermatrix 3 reagiert nach dem Prinzip der Kaliumiodid/Stärke-Reaktion in Kombination mit einem Reduktionsmittel, vorliegend Natriumthiosulfat. Die geeignete Konzentration von Natriumthiosulfat, um eine gut zu differenzierende Farbreaktion zwischen 2000 und 3500 mg/L Chlordioxid zu erreichen, liegt bei 1,9 g/20 mL Imprägnierlösung. Geringere Mengen Natriumthiosulfat von 0,9 g - 1,7 g/20 mL Imprägnierlösung zeigen eine zu starke Reaktionsfarbe mit schlechter Unterscheidbarkeit im gewünschten Konzentrationsbereich (siehe Einträge 1 bis 5). Höhere Konzentrationen Natriumthiosulfat, wie 2,1 g/20 mL Imprägnierlösung (siehe Eintrag 7) führen zu einer Unterscheidbarkeit ab 2500 mg/L Chlordioxid. Eine Reaktionsfarbe bis zu 2000 mg/L freiem Chlor bleibt aus.

Die zuvor beschriebene Testvorrichtung 1 ist dahingehend von Vorteil, dass diese einen Messbereich von 10-3500 mg/L Chlordioxid aufweist, wobei der Messbereich von 10-2000 mg/L Chlordioxid durch die erste Trägermatrix 2 abgedeckt wird. Gleichzeitig wird eine mögliche Störung durch freies Chlor bis 1000 mg/L wirksam verhindert. Der Messbereich von 2000-3500 mg/L Chlordioxid wird durch die zweite Trägermatrix 3 abgedeckt.

### Bezugszeichenliste

- 1: Testvorrichtung
- 2: Trägermatrix
- 3: Trägermatrix
- 4: Träger

## Patentansprüche

1. Testvorrichtung (1) zur semi-quantitativen Bestimmung von Chlordioxid in einer flüssigen Probe, wobei die Testvorrichtung (1) eine erste Trägermatrix (2) aufweist, die mindestens eine Aminosäure, mindestens einen Redoxindikator, Puffersubstanzen und mindestens ein Tensid enthält, **dadurch gekennzeichnet, dass** die Testvorrichtung (1) mindestens zwei Trägermatrizes (2, 3) aufweist, wobei die erste Trägermatrix (2) Natriumthiosulfat enthällt, dass die zweite Trägermatrix (3) mindestens ein anorganisches lodidsalz, Stärke und/oder mindestens ein Stärke-Derivat, Natriumthiosulfat, Puffersubstanzen und mindestens ein Tensid enthält, und dass die Zusammensetzungen der Trägermatrizes (2, 3) derart gewählt sind, dass der Messbereich 10-2000 mg/L Chlordioxid von der ersten Trägermatrix (2) und der Messbereich 2000-3500 mg/L Chlordioxid von der zweiten Trägermatrix (3) abgedeckt wird.

2. Testvorrichtung (1) nach Anspruch 1, **dadurch gekennzeichnet, dass** die Aminosäure ausgewählt ist aus der Gruppe bestehend aus Alanin, Glycin, Histidin, Leucin, Isoleucin, Lysin, Valin und Prolin, wobei Glycin bevorzugt ist.

3. Testvorrichtung (1) nach Anspruch 1 oder 2, **dadurch gekennzeichnet, dass** der Redoxindikator ausgewählt ist aus der Gruppe bestehend aus Benzidin, o-Tolidin, o-Dianisidin, 3,3'-5,5'-Tetramethylbenzidin und Syringaldazin, wobei 3,3'-5,5'-Tetramethylbenzidin bevorzugt ist.

4. Testvorrichtung (1) nach einem der vorhergehenden Ansprüche, **dadurch gekennzeichnet, dass** die Puffersubstanzen ausgewählt sind aus der Gruppe bestehend aus Phosphate, Acetate, Citrate, Tartrate und Borate.

5. Testvorrichtung (1) nach einem der vorhergehenden Ansprüche, **dadurch gekennzeichnet, dass** das Tensid ausgewählt ist aus der Gruppe bestehend aus Fettalkoholethoxylate, Fettalkoholpropoxylate, Alkylglucoside, Alkylpolyglucoside, Oktylphenolethoxylate, Natriumlaurylsulfat, Ammoniumlaurylsulfat, Natriumlaurylethersulfat, Natriummyristylethersulfat, Natriumdioctylsulfosuccinat, Dodecylpyridiniumchlorid und Cocamidopropyl-Betain, wobei Natriumlaurylsulfat bevorzugt ist.

6. Testvorrichtung (1) nach einem der vorhergehenden Ansprüche, **dadurch gekennzeichnet, dass** die erste Trägermatrix (2) einen Inertfarbstoff aufweist, insbesondere Tartrazin, Neozapongelb oder Gelborange.

7. Testvorrichtung (1) nach Anspruch 6, **dadurch gekennzeichnet, dass** die Konzentration des Interfarbstoffs im Bereich von 0,5-2,5 mmol/L liegt, bevorzugt im Bereich von 1,0-2,0 mmol/L, besonders bevorzugt im Bereich von 1,0-1,5 mmol/L und insbesondere 1,24 mmol/L beträgt.

8. Testvorrichtung (1) nach einem der vorhergehenden Ansprüche, **dadurch gekennzeichnet, dass** das anorganische lodidsalz ausgewählt ist aus der Gruppe bestehend aus Lithiumiodid, Natriumiodid, Kaliumiodid, Rubidiumiodid, Cäsiumiodid, Magnesiumiodid, Calciumiodid, Strontiumiodid und Bariumiodid, wobei Kaliumiodid bevorzugt ist.

9. Testvorrichtung (1) nach einem der vorhergehenden Ansprüche, **dadurch gekennzeichnet, dass** die Stärke ausgewählt ist aus der Gruppe bestehend aus Kartoffelstärke, Maisstärke, Reisstärke und Weizenstärke, wobei Kartoffelstärke bevorzugt ist.

10. Testvorrichtung (1) nach einem der vorhergehenden Ansprüche, **dadurch gekennzeichnet, dass** die Stärke/lodid-Mischung der zweiten Trägermatrix (3) ein Gewichtsverhältnis von 1:1 bis 10:1 aufweist, bevorzugt von 2:1 bis 5:1, insbesondere von 2,8:1, und dass die Konzentration von Natriumthiosulfat im Bereich von 0,3-0,46 mol/L, bevorzugt im Bereich von 0,34-,44 mol/L, insbesondere im Bereich von 0,36-0,40 mol/L liegt.

11. Testvorrichtung (1) nach einem der vorhergehenden Ansprüche, **dadurch gekennzeichnet, dass** die Testvorrichtung (1) als Teststreifen ausgebildet ist, wobei die Trägermatrizes (2, 3) flüssigkeitsabsorbierend sind.

12. Testvorrichtung (1) nach Anspruch 11, **dadurch gekennzeichnet, dass** die Trägermatrizes (2, 3) am Ende des Teststreifens räumlich voneinander getrennt, aber in räumlicher Nähe, angebracht sind.

13. Verfahren zur semi-quantitativen Bestimmung von Chlordioxid in einer flüssigen Probe enthaltend freies Chlor, umfassend:
a) In Kontakt bringen der flüssigen Probe mit beiden Trägermatrizes (2, 3) einer Testvorrichtung (1) nach einem der vorhergehenden Ansprüche;
b) Vergleich der Farbe beider Trägermatrizes (2, 3) mit einer Farbskala zum Ablesen der Chlordioxid-Konzentration.

## Claims

1. Test device (1) for the semi-quantitative determination of chlorine dioxide in a liquid sample, the test device (1) comprising a first carrier matrix (2) containing at least one amino acid, at least one redox indicator, buffer substances and at least one surfactant, **characterized in that** the test device (1) comprises at least two carrier matrices (2, 3), the first carrier matrix (2) containing sodium thiosulfate, **in that** the second carrier matrix (3) contains at least one inorganic iodide salt, starch and/or at least one starch derivative, sodium thiosulfate, buffer substances and at least one surfactant, and **in that** the compositions of the carrier matrices (2, 3) are selected in such a way that the measuring range 10-2000 mg/L chlorine dioxide is covered by the first carrier matrix (2) and the measuring range 2000-3500 mg/L chlorine dioxide is covered by the second carrier matrix (3).

2. Test device (1) according to claim 1, **characterized in that** the amino acid is selected from the group consisting of alanine, glycine, histidine, leucine, isoleucine, lysine, valine and proline, glycine being preferred.

3. Test device (1) according to claim 1 or 2, **characterized in that** the redox indicator is selected from the group consisting of benzidine, o-tolidine, o-dianisidine, 3,3'-5,5'-tetramethylbenzidine and syringaldazine, 3,3'-5,5'-tetramethylbenzidine being preferred.

4. Test device (1) according to any of the preceding claims, **characterized in that** the buffer substances are selected from the group consisting of phosphates, acetates, citrates, tartrates and borates.

5. Test device (1) according to any of the preceding claims, **characterized in that** the surfactant is selected from the group consisting of fatty alcohol ethoxylates, fatty alcohol propoxylates, alkyl glucosides, alkyl polyglucosides, octylphenol ethoxylates, sodium lauryl sulfate, ammonium lauryl sulfate, sodium lauryl ether sulfate, sodium myristyl ether sulfate, sodium dioctyl sulfosuccinate, dodecylpyridinium chloride, and cocamidopropyl betaine, with sodium lauryl sulfate being preferred.

6. Test device (1) according to any of the preceding claims, **characterized in that** the first carrier matrix (2) comprises an inert dye, in particular tartrazine, neozapon yellow or yellow orange.

7. Test device (1) according to claim 6, **characterized in that** the concentration of the inert dye is in the range of 0.5-2.5 mmol/L, preferably in the range of 1.0-2.0 mmol/L, particularly preferably in the range of 1.0-1.5 mmol/L and in particular is 1.24 mmol/L.

8. Test device (1) according to any of the preceding claims, **characterized in that** the inorganic iodide salt is selected from the group consisting of lithium iodide, sodium iodide, potassium iodide, rubidium iodide, cesium iodide, magnesium iodide, calcium iodide, strontium iodide and barium iodide, potassium iodide being preferred.

9. Test device (1) according to any of the preceding claims, **characterized in that** the starch is selected from the group consisting of potato starch, corn starch, rice starch and wheat starch, potato starch being preferred.

10. Test device (1) according to any of the preceding claims, **characterized in that** the starch/iodide mixture of the second carrier matrix (3) has a weight ratio of from 1:1 to 10:1, preferably from 2:1 to 5:1, in particular from 2.8:1, and **in that** the concentration of sodium thiosulfate is in the range of 0.3-0.46 mol/L, preferably in the range of 0.34-0.44 mol/L, in particular in the range of 0.36-0.40 mol/L.

11. Test device (1) according to any of the preceding claims, **characterized in that** the test device (1) is designed as a test strip, the carrier matrices (2, 3) being liquid-absorbent.

12. Test device (1) according to claim 11, **characterized in that** the carrier matrices (2, 3) are attached at the end of the test strip spatially separated from, but in spatial proximity to each other.

13. Method for the semi-quantitative determination of chlorine dioxide in a liquid sample containing free chlorine, the method comprising:
a) Bringing the liquid sample into contact with both carrier matrices (2, 3) of a test device (1) according to any of the preceding claims;
b) Comparison of the color of both carrier matrices (2, 3) with a color scale for reading the chlorine dioxide concentration.

## Revendications

1. Dispositif de test (1) pour la détermination semi-quantitative du dioxyde de chlore dans un échantillon liquide, le dispositif de test (1) présentant une première matrice de support (2) qui contient au moins un acide aminé, au moins un indicateur redox, des substances tampons et au moins un agent tensioactif, **caractérisé en ce que** le dispositif de test (1) présente au moins deux matrices de support (2, 3), la première matrice de support (2) contenant du thiosulfate de sodium, **en ce que** la deuxième matrice de support (3) contient au moins un sel d'iodure inorganique, de l'amidon et/ou au moins un dérivé d'amidon, du thiosulfate de sodium, des substances tampons et au moins un agent tensioactif, et **en ce que** les compositions des matrices de support (2, 3) sont choisies de telle sorte que la plage de mesure 10-2000 mg/L de dioxyde de chlore soit couverte par la première matrice de support (2) et la plage de mesure 2000-3500 mg/L de dioxyde de chlore par la deuxième matrice de support (3).

2. Dispositif de test (1) selon la revendication 1, **caractérisé en ce que** l'acide aminé est choisi dans le groupe constitué par l'alanine, la glycine, l'histidine, la leucine, l'isoleucine, la lysine, la valine et la proline, la glycine étant préférée.

3. Dispositif de test (1) selon la revendication 1 ou 2, **caractérisé en ce que** l'indicateur redox est choisi dans le groupe constitué par la benzidine, l'o-tolidine, l'o-dianisidine, la 3,3'-5,5'-tétraméthylbenzidine et la syringaldazine, la 3,3'-5,5'-tétraméthylbenzidine étant préférée.

4. Dispositif de test (1) selon l'une des revendications précédentes, **caractérisé en ce que** les substances tampons sont choisies dans le groupe constitué par les phosphates, les acétates, les citrates, les tartrates et les borates.

5. Dispositif de test (1) selon l'une des revendications précédentes, **caractérisé en ce que** l'agent tensioactif est choisi dans le groupe constitué par les éthoxylates d'alcools gras, les propoxylates d'alcools gras, les alkylglucosides, les alkylpolyglucosides, éthoxylates d'octylphénol, laurylsulfate de sodium, laurylsulfate d'ammonium, lauryléthersulfate de sodium, myristyléthersulfate de sodium, dioctylsulfosuccinate de sodium, chlorure de dodécylpyridinium et cocamidopropylbétaïne, le laurylsulfate de sodium étant préféré.

6. Dispositif de test (1) selon l'une des revendications précédentes, **caractérisé en ce que** la première matrice support (2) comprend un colorant inerte, en particulier la tartrazine, le jaune néozapon ou le jaune orangé.

7. Dispositif de test (1) selon la revendication 6, **caractérisé en ce que** la concentration du colorant interférentiel se situe dans la plage de 0,5 à 2,5 mmol/L, de préférence dans la plage de 1,0 à 2,0 mmol/L, de manière particulièrement préférée dans la plage de 1,0 à 1,5 mmol/L et en particulier est de 1,24 mmol/L.

8. Dispositif de test (1) selon l'une des revendications précédentes, **caractérisé en ce que** le sel d'iodure inorganique est choisi dans le groupe constitué par l'iodure de lithium, l'iodure de sodium, l'iodure de potassium, l'iodure de rubidium, l'iodure de césium, l'iodure de magnésium, l'iodure de calcium, l'iodure de strontium et l'iodure de baryum, l'iodure de potassium étant préféré.

9. Dispositif de test (1) selon l'une des revendications précédentes, **caractérisé en ce que** l'amidon est choisi dans le groupe constitué par l'amidon de pomme de terre, l'amidon de maïs, l'amidon de riz et l'amidon de blé, l'amidon de pomme de terre étant préféré.

10. Dispositif de test (1) selon l'une des revendications précédentes, **caractérisé en ce que** le mélange amidon/iodure de la deuxième matrice de support (3) présente un rapport pondéral de 1:1 à 10:1, de préférence de 2:1 à 5:1, en particulier de 2,8:1, et **en ce que** la concentration en thiosulfate de sodium est comprise entre 0,3 et 0,46 mol/L, de préférence entre 0,34 et,0,44 mol/L, en particulier entre 0,36 et 0,40 mol/L.

11. Dispositif de test (1) selon l'une des revendications précédentes, **caractérisé en ce que** le dispositif de test (1) est conçu comme une bandelette de test, les matrices de support (2, 3) absorbant les liquides.

12. Dispositif de test (1) selon la revendication 11, **caractérisé en ce que** les matrices de support (2, 3) sont placées à l'extrémité de la bandelette de test, séparées spatialement l'une de l'autre, mais à proximité spatiale.

13. Procédé de détermination semi-quantitative du dioxyde de chlore dans un échantillon liquide contenant du chlore libre, comprenant :
a) la mise en contact de l'échantillon liquide avec les deux matrices de support (2, 3) d'un dispositif de test (1) selon l'unedes revendications précédentes ;
b) comparaison de la couleur des deux matrices de support (2, 3) avec une échelle de couleurs permettant de lire la concentration en dioxyde de chlore.
